Europäisches Patentamt

European Patent Office

Office européen des brevets

(11) Publication number: **0 381 909**
**A1**

## EUROPEAN PATENT APPLICATION

(21) Application number: 89500103.0

(22) Date of filing: **14.10.89**

(51) Int. Cl.5: **F16M 11/40**

(30) Priority: **18.10.88 ES 8803635**
**16.08.89 ES 8902872**

(43) Date of publication of application:
**16.08.90 Bulletin 90/33**

(84) Designated Contracting States:
**AT BE CH DE FR GB GR IT LI NL SE**

(71) Applicant: **ASSOCIATE DESIGNERS, S.A.**
**Piso Reina Elisenda de Montcada, 17**
**E-08034 Barcelona(ES)**

(72) Inventor: **Sant Pont, Jose Ma**
**Ma Auxiliadora, 23, sobreático**
**E-08017 Barcelona(ES)**
Inventor: **Bigas Balcells, Ramon**
**Canet, 21, bajos**
**E-08017 Barcelona(ES)**

(74) Representative: **Ferregüela Colon, Eduardo**
**Agricultura, 99**
**E-08019 Barcelona(ES)**

(54) **Supporting bar.**

(57) Supporting bar of the type that is made up a core (2), easily bent on said longitudinal plane, wrapped in an external casing wich exerts evenly distributed centripetal pressure along the whole lengt of the bar. Over the core there are applied a pair of flexible strips (6), tightly held against said core by the mentioned external casing. This external casing comprises a first internal layer (7) constituted by a thermoretractable plastic tube; a second layer (8) made of essentially nonelastic tape and wrapped with some pressure around the first layer; and preferably a third external layer (9), made of a flexible material, wrapped around the second layer to enhance the external appearance of the bar.

FIG. 1

FIG. 3

## SUPPORTING BAR

This invention is a supporting bar susceptible to plastic deformations along its longitudinal plane. It is wrapped in an external casing that exerts evenly distributed centripetal pressure along the entire length of the bar.

Supporting bars of this type are already known. Those, for example, described by this applicant in the Spanish Models of Utility, numbers 289,847 and 289,848. This type of supporting bar can sustain a mild bending moment without any apparent deformation. But beyond this point plastic deformations occur.

Essentially, the specifications for this type of support are as follows:
- It supports the resultant weight moment in any position.
- A small increase of bending moment beyond this given point results in plastic deformation in which the bar remains in its new position with very little elastic reaction.
- It can resist a great number of 180o bending cycles without losing its functional abilities, thereby guaranteeing minimum faultless working life of ten years.
- It maintains its static and dynamic properties under all normal environmental conditions.

However, the production of this type of bar presents certain problems which make it difficult to industrialize and consequently it has a relatively high cost.

The supporting bar described here resolves these problems. Its costs less and as it can support a greater number of 180o bending cycles, is more resistant and reliable.

Essentially, the bar described here is characterized by its core which is made up of multiple rigid sections, each of which has two flat, longitudinal and parallel surfaces facing each other. Each surface is joined to the other by a hinge or bending segment on the double series of the rigid section's flat parallel surfaces. Both longitudinal, flexible strips are held tightly against their respective, above mentioned, flat surfaces by the external casing cited earlier. The bar is formed in such a way that when it is in rest position it acts as a solid bar due to the frictional forces between the longitudinal strips and the bar core. When it is subjected to a bending force through the application of a force couple essentially perpendicular to the flat surfaces of the core which are greater than the frictional forces between the longitudinal strips and the rigid sections, the longitudinal strips slide over the core and, through the action of the hinge or bending sections, allow bar flexion. The centripetal force exerted by the casing is so great that when the flexional force ceases, the frictional force between the strips and the core is greater than the recuperative elastic forces produced by the natural elasticity of the strip's material. The bar, therefore, behaving in a plastic manner, becomes deformed. Another feature of this invention is the link chain core which forms the rigid sections which in turn are made up of of their respective parallel axes.

An alternative core is made up of a prismatic section rod, preferably quadrangular, with at least one relatively long first section in constant cross section, essentially rigid, which forms a relatively long rigid section; and at least one second section with multiple deep notches opposed pairwise to each other and cut into the two longitudinal, flat, opposed surfaces. Between the bottoms of each pair of opposed notches there is a very thin flexible rod segment which forms a hinge, and a short rigid core segment between every two hinge segments on the second section.

Another feature of this invention is the previously mentioned external casing which is made up of an internal first layer applied directly and strongly onto the core by heating and is made of plastic thermoretractable tube; a second layer of essentially non-elastic tape applied by pressure over the first layer; and preferably a third external layer made of a flexible material to esthetically enhance the external appearance of the bar.

The attached drawings show, in a non-limiting way, two methods in which this invention, the supporting bar described here, may be elaborated.

Fig .1 shows a perspective view of a partially cut section of the supporting bar. This is one way in which the bar may be made;

Fig. 2 shows a view similar to Fig. 1 but with a second configuration in which the bar may be produced; and

Fig. 3 and 4 show side elevations with the bar fixed at one end.

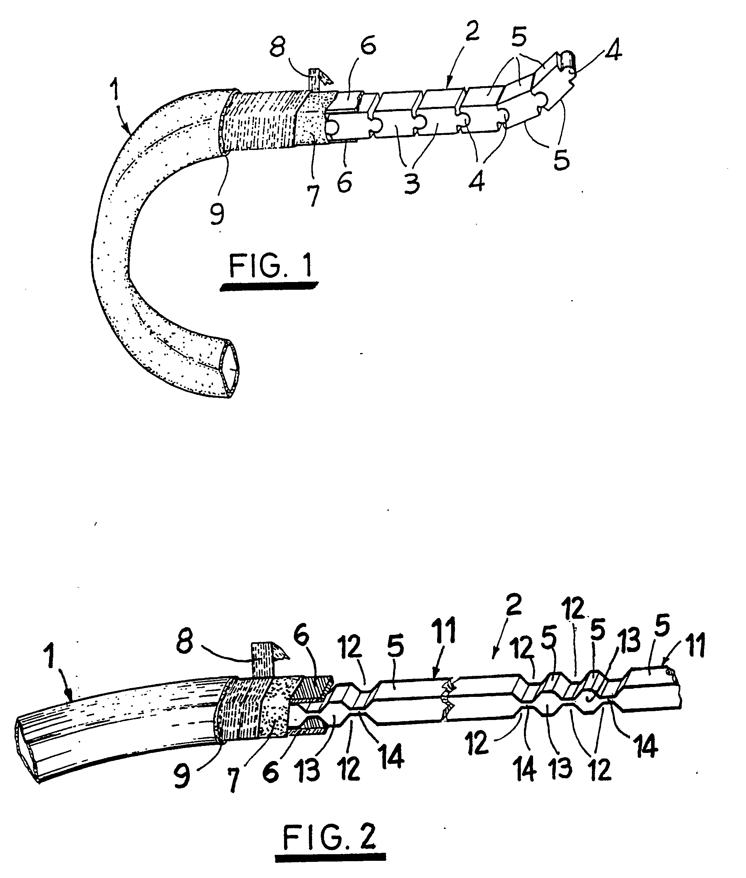

It may be seen in these drawings that the supporting bar 1, represented by Fig. 1, has a core 2 that is made up of a chain of hinged links 3 which form the rigid sections. The axes of rotation 4 are parallel between every two consecutive links 3 which make up the hinge segments. Each link 3 has at least two longitudinal, flat, parallel and pairwise opposed surfaces.

In Fig. 2 the core is formed by a prismatic section rod, preferably quadrangular, which has two primary segments 11, in constant cross section, that make up the relatively long rigid sections, and two secondary sections with multiple deep notches in cross section 12. The notches are opposed pairwise and cut into the two longitudinal, flat and opposed surfaces 5.

Between the bottoms of each pair of notches 12 there is a very thin and flexible rod segment 14 which forms an elemental part of the bending segment.

Between every elemental part of the bending segment 14 there is a short rigid segment 13 in the secondary sections.

The longitudinal, flexible strips 6 are placed along the entire length of the two surfaces 5 and held tightly in place against these surfaces 5 by an external casing.

This external casing is formed by an internal layer 7 applied directly and strongly by heat around the core 2. It is made of thermoretractable plastic tube. A second layer 8is placed around this primary layer 7. It is essentially a non-elastic tape which is applied around the first layer 7 by mild pressure.

Preferably the envelope will have a third external layer 9 around the second layer 8 made of a flexible material which will enhance the external appearance of the bar.

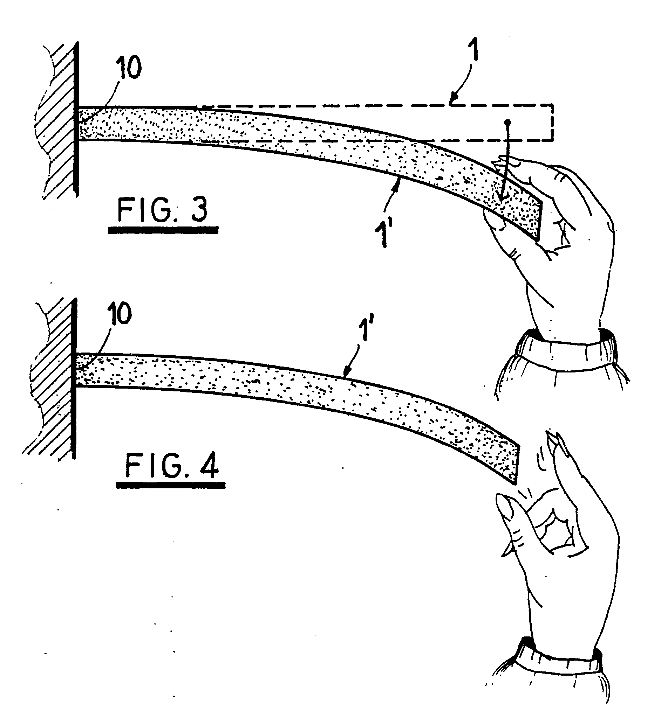

Due to the frictional forces between the strips 6 and the flat surfaces 5 the whole unit will function as a solid bar 1 when it is in rest position. But when the bar 1 is subjected to a bending force, such as that indicated by the arrow in Fig. 2, by a force couple, represented in the drawing by the stationary end 10 and the hand at the other end of the bar 1. Pressure is applied greater than the cited frictional forces be tween the strips 6 and the flat surfaces 5, the strips 6 slide over the surfaces 5 and allow the bar 1 to bend. As far as position 1′, for example, as shown in the drawing. This centripetal pressure exerted by the casing is such that when the bending force stops Fig. 3, the frictional force between the strips and 6 and the surfaces 5 is greater than the recuperative elastic forces produced by the inherent elastic properties in the material from which the strips 6 are made. Under such circumstances the bar 1 will be deformed and following the norms of plastic behavior will remain, on its own, in position 1′.

The core may be made of a plastic material such as rigid PVC, polypropylene and polyacetals etc. Rigid zones may also be sandwiched into the core 2 of the bar shown in Fig. 1. These, for example, could be made up of larger links which would limit the bending of the bar in accordance with their properties and placement.

Both longitudinal strips 6 and the core 2 are fixed at one end by a screw or rivet, the other end remaining free so that the longitudinal strips 6 can slide over the surfaces 5.

The weight that the supporting bar can bear at one of its ends is determined by the three-dimensional shape of the bar itself and the pressure exerted by the second layer wrapping 8 made of non-elastic tape. It is evident that greater the pressure exerted by the taped layer 8 the greater will be the friction produced between the strips 6 and the surfaces. Consequently, the supporting bar will be able to bear more weight.

The character and way of using the invention being sufficiently described, it may be noted that everything that does not alter, change or modify its basic principal may be subjected to variations of detail. The most important features are described in the following claims.

## Claims

1- Supporting bar susceptible to plastic deformations along its longitudinal plane, of the type that is made up of a core, easily bent, on said longitudinal plane, wrapped in an external casing which exerts evenly distributed centripetal pressure along the whole length of the bar, characterized by the core which is made up of multiple rigid sections, each of which has two longitudinal, flat, parallel surfaces facing each other, and joined to each other by a hinged or bending segment, there being applied over the double parallel series of the flat surfaces of the rigid sections longitudinal, flexible strips, tightly held against said respective flat surfaces by the mentioned external casing in such a way that when it is in rest position the unit behaves like a solid bar due to the frictional forces between the longitudinal strips and the core, so that when it is subjected to a bending force by the application of a force couple in an essentially perpendicular direction to the said flat rod surfaces so that these forces are greater than the frictional forces between the longitudinal strips and the elemental rigid sections, the said longitudinal strips slide over the core and allow the bar to bend by means of the hinge or bending sections, the centripetal pressure exerted by the casing being such that when the bending force stops, the frictional force between the strips and the core is greater than the recuperative elastic force exerted by the inherent elasticity of the material from which the strips are made, the bar, therefore, following the norms of plastic behaviour, is deformed.

2- Supporting bar as described in claim 1, characterized by the core which is formed by a link chain which makes up the rigid sections which are joined together by hinge segments made up by their respective parallel shafts of rotation.

3- Supporting bar as described in claim 1, characterized by the core which is formed by a prismatic rod section, preferably quadrangular, which has at least one relatively long first section,

in constant cross section and essentially rigid which makes up a relatively long rigid section, and at least one second section with multiple, deep, crosswise notches, opposed pairwise to each other and cut into the two longitudinal, flat, opposed surfaces, there being at the bottom of each pair of interfacing notches, a very thin and flexible rod segment which forms a bending segment and a short rigid core segment between every two bending segments on the second section.

4- Supporting bar as described in claim 1, characterized by the cited external casing which is made up of a first internal layer applied directly and strongly by heat onto the core and consists of a thermoretracta ble plastic tube; a second layer made of essentially non-elastic tape is wrapped with some pressure around the first layer; and preferably a third external layer, made of a flexible material, wrapped around the second layer to enhance the external appearance of the bar.

FIG. 1

FIG. 2

10

1

1'

<u>FIG. 3</u>

10

1'

<u>FIG. 4</u>

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 267 339 (SANT-PONT) <br> * Whole document * <br> --- | 1 | F 16 M 11/40 |
| A | DE-C- 114 474 (ARNOLD FLEXIBLE BRACKET) <br> * Whole document * <br> --- | 1 | |
| A | FR-A-2 612 281 (JOANNET) <br> * Page 4, line 26 - page 5, line 3; figures 2,6 * <br> ----- | 1,2,3 | |

TECHNICAL FIELDS SEARCHED (Int. Cl.5)

F 16 M
F 21 V

The present search report has been drawn up for all claims

| Place of search | Date of completion of the search | Examiner |
|---|---|---|
| THE HAGUE | 17-01-1990 | BARON C. |

EPO FORM 1503 03.82 (P0401)